# EUROPÄISCHE PATENTSCHRIFT

(11) **EP 2 885 381 B1**
(45) Veröffentlichungstag und Bekanntmachung des Hinweises auf die Patenterteilung: **04.04.2018**
(21) Anmeldenummer: 13753272.7
(22) Anmeldetag: 08.08.2013
(51) Int. Cl.: C10J 3/50, C21C 5/46

(54) **VORRICHTUNG UND VERFAHREN ZUR EINDÜSUNG VON SAUERSTOFF IN EINE DRUCKAUFGELADENE WIRBELSCHICHTVERGASUNG**
DEVICE AND METHOD FOR INTRODUCING OXYGEN INTO A PRESSURIZED FLUIDIZED-BED GASIFICATION PROCESS
DISPOSITIF ET PROCÉDÉ POUR INJECTER DE L'OXYGÈNE DANS UN DISPOSITIF DE GAZÉIFICATION EN LIT FLUIDISÉ PRESSURISÉ

(30) Priorität: 14.08.2012 DE 102012016086
(43) Veröffentlichungstag der Anmeldung: 24.06.2015
(73) Patentinhaber: ThyssenKrupp Industrial Solutions AG, 45143 Essen (DE)
(72) Erfinder: ABRAHAM, Ralf, 59192 Bergkamen (DE); PAVONE, Domenico, 44797 Bochum (DE); SCHULZE ECKEL, Reinald, 48167 Münster (DE); TOPOROV, Dobrin, 44141 Dortmund (DE); HAFNER, Simon, Boris, 44265 Dortmund (DE)
(74) Vertreter: thyssenkrupp Intellectual Property GmbH
(86) Internationale Anmeldenummer: PCT/EP2013/002369
(87) Internationale Veröffentlichungsnummer: WO 2014/026748

(56) Entgegenhaltungen:
- EP-A2- 2 476 956
- WO-A1-01/75367
- WO-A2-2010/006723
- DE-C2- 3 439 404
- GB-A- 1 001 032
- US-A- 4 491 456
- US-A- 5 281 243

## Beschreibung

Die Erfindung betrifft ein Verfahren und eine Vorrichtung zur Eindüsung von Sauerstoff in eine druckaufgeladene Wirbelschichtvergasung, die typischerweise nach dem Hochtemperatur-Winkler-Verfahren (HTW-Verfahren) in einem Vergasungsreaktor zum Einsatz kommt.

Das HTW-Verfahren ist seit langem bekannt und gilt als erprobte Technologie, mit der sowohl stückige als auch flüssige oder pastöse kohlenstoffhaltige Brennstoffe in Synthesegas umgewandelt werden. Als Brennstoffe kommen auch schwierige Brennstoffe mit sehr hohem Ascheanteil, sowie biomassestämmige Brennstoffe und kohlenstoffhaltige Abfallstoffe zur Anwendung. Diese werden in eine Wirbelschicht, die als blasenbildende Wirbelschicht betrieben wird, eingeführt und mit Sauerstoff, Wasserdampf und CO₂ vergast. Das HTW-Verfahren arbeitet gegenüber anderen Vergasungsverfahren bei moderaten Temperaturen, bei denen die entstehende Asche nicht schmilzt. Dies hat insbesondere bei korrosiven Aschen betriebliche Vorteile.

Die Zugabe von Sauerstoff muss sehr gut dosiert werden, da eine zu hohe Eindosierung zu einem erhöhten Ausbrand und damlt zu einer Erhöhung des CO₂-Anteils im Synthesegas führen würde, was vermieden werden muss. Auch würde eine zu hohe Eindosierung in der unmittelbaren Umgebung der Sauerstoffeintrittsstellen zu einem Aufschmelzen der Aschepartikel führen, mit der Folge, dass Verbackungen mit dem Wirbelbettmaterial entstehen können, die ihrerseits zu Verklebungen an den Sauerstofflanzen führen würden. Hierfür ist wegen der teilweise diskontinuierlichen Zuführung der Brennstoffe unter Druck eine präzise, schnelle und feine Regelung der Sauerstoffzufuhr erforderlich. Dies führt zu besonders hohen Anforderungen an die Sauerstofflanzen, die typischerweise zum Eintrag des benötigten Sauerstoffs in den Wirbelschichtreaktor eingesetzt werden.

Entsprechende Sauerstofflanzen werden beispielhaft in der DE 34 39 404 C2 und der DE 44 07 651 C1 beschrieben, die dem bisherigen Stand der Technik entsprechen. Das Problem der möglichen Anbackungen wird darin so gelöst, dass an der Stelle des Austritts des Sauerstoffs eine Dampfzugabe derart angeordnet wird, dass sich ein Dampfschleier bildet, der den austretenden Sauerstoffstrahl umhüllt. Die sich hierbei bildenden Verwirbelunlgen im austretenden Gasstrahl haben einen sehr hohen Dampfanteil, der eine Überhitzung der mitgerissenen Wirbelbettpartikel verhindert und somit die Anbackungsneigung erheblich reduziert.

Diese Technologie ist jedoch bei Drücken oberhalb von 8 bis 10 bar problematisch. Vor der Zugabe in die Sauerstofflanze wird der Sauerstoff üblicherweise vorgewärmt. Aus Sicherheitsgründen möchte man aber keine Erwärmung auf über 180°C vornehmen, da hierbei industrieübliche Ausrüstungsteile, insbesondere Dichtungen angegriffen werden. Oberhalb von 200°C bestehen für den Materialeinsatz auch rechtliche Zulassungsbeschränkungen. Führt man im Inneren der Sauerstofflanze den vorgewärmten Sauerstoff bei 180°C und gibt in einem Hüllrohr überhitzten Wasserdampf auf, bilden sich oberhalb von 8 bis 10 bar Druck auf der Dampfseite des Sauerstoff führenden Rohres Kondensate. Diese Kondensate ändern die Strömungsverhältnisse am Gasaustritt so gravierend, dass sich kein umhüllender Wasserdampfschleier um die Sauerstofflanze mehr bildet. Dies führt zum Versagen der Sauerstofflanzen.

Die Aufgabe der Erfindung ist es daher, eine Vorrichtung und ein Verfahren zur Eindüsung von Sauerstoff in eine druckaufgeladene Wirbelschichtvergasung zur Verfügung zu stellen, die auch für Betriebsdrücke oberhalb von 10 bar geeignet und bei hoher Sicherheit und Verfügbarkeit wirtschaftlich ist.

Die Aufgabe wird gelöst durch eine Sauerstofflanze, aufweisend wenigstens drei koaxial ineinander angeordnete und wenigstens jeweils einen Ringspalt begrenzende Rohre, wobei
- das äußerste Rohr für die Durchleitung von überhitztem Dampf ausgeführt ist und eine Dampfzuführungsstelle aufweist,
- das mittlere Rohr als Ringspalt ausgeführt ist,
- das innerste Rohr für die Durchleitung von mit einer Temperatur von höchstens 180°C heißem Sauerstoff ausgeführt ist und eine Sauerstoffzuführungsstelle aufweist,
- innerhalb des innersten Rohres eine Temperatursonde angeordnet ist, die bis kurz vor die Mündung des innersten Rohres reicht,
- sich das innerste Rohr vor seiner Mündung düsenartig verjüngt,
- das innerste Rohr in das mittlere Rohr mündet, und
- die Mündung des mittleren Rohres gegenüber der Mündung des äußersten Rohres weiter herausragt.

In einer Ausgestaltung ist das mittlere Rohr auf der Mündungsseite der Sauerstofflanze offen. In einer weiteren Ausgestaltung ist das mittlere Rohr für die Durchleitung von trockenem Gas ausgeführt und weist eine Gaseinleitungsstelle auf. Hierbei kann in einer weiteren Ausgestaltung vorgesehen werden, dass sich das mittlere Rohr vor der Mündung des innersten Rohres in das mittlere Rohr düsenartig verjüngt.

Unter trockenem Gas wird hier, wie in der Verbrennungstechnik im Gegensatz zur Dampferzeugungstechnik üblich, ein technisches Gas ohne Wasserdampfanteile verstanden. Unter feuchtem Gas wird im Folgenden demgegenüber ein technisches Gas verstanden, welches auch Wasserdampfanteile enthält, wobei dies aber nicht bedeuten soll, dass sich ein Mehrphasengemisch gebildet hat. Überhitzter Wasserdarmpf ist demnach als feuchtes Gas zu betrachten, obwohl er trocken in dem Sinne ist, dass kein Nassdampf entstanden ist.

Die Aufgabe wird auch durch ein Verfahren zur Einleitung von Sauerstoff in einen nach dem HTW-Verfahren betriebenen Wirbelschichtvergasungsreaktor mittels einer Sauerstofflanze wie oben beschrieben gelöst, wobei
- in das äußerste Rohr feuchtes Gas mit einem Druck oberhalb des Druckes im Wirbelschichtvergasungsreaktor zugeführt wird,
- in das innerste Rohr Sauerstoff mit einer Temperatur von höchstens 180°C und mit einem Druck oberhalb des Druckes im Wirbelschichtvergasungsreaktor durchgeleitet wird,
- feuchtes Gas aus der Mündung des äußersten Rohres als Mantelströmung um die Mündung des mittleren Rohres und den austretenden Freistrahl austritt, wobei die Strömungsgeschwindigkeit des austretenden feuchten Gases größer als die des austretenden Gases aus dem innersten Rohr eingestellt wird.

In Ausgestaltungen des Verfahrens kann vorgesehen werden, dass in das mittlere Rohr trockenes Gas mit einem Druck oberhalb des Druckes im Wirbelschichtvergasungsreaktor eingeleitet wird und dass Sauerstoff und trockenes Gas vor der Mündung des mittleren Rohres vermischt werden.

In weiteren Ausgestaltungen des Verfahrens wird vorgesehen, dass das feuchte Gas überhitzter Wasserdampf oder eine Mischung aus Kohlendioxid und überhitztem Wasserdampf ist.

In weiteren Ausgestaltungen des Verfahrens wird vorgesehen, dass das trockene Gas Kohlendioxid, Stickstoff, oder eine Mischung aus Kohlendioxid und Luft oder eine Mischung aus Kohlendioxid und Stickstoff ist. Zudem ist, sofern im Vergasungsprozess gewünscht, der Betrieb ohne trockenes Gas möglich, wobei die positiven Auswirkungen auf die Temperatur des feuchten Gases erhalten bleiben. Die Mindest-Zuführungstemperatur des trockenen Gases in das mittlere Rohr ergibt sich aus dem Taupunkt des eingesetzten feuchten Gases im äußersten Rohr, bei reinem Wasserdampf entspricht dies der Sattdampftemperatur.

Es stellte sich heraus, dass diese technische Lösung wirtschaftlich besonders günstig ist, da die Versorgungsleitungen für Kohlendioxid aufgrund der Notwendigkeit, bei Schnellabschaltungen eine Inertisierung der Sauerstofflanzen sicherzustellen, genutzt werden können, und die Einfügung eines weiteren Rohres in die Sauerstofflanzen nur wenig Aufwand bereitet. Durch die Wahl eines trockenen Gases mit hoher spezifischer Wärmekapazität und die zusätzliche Abschirmung des heißen, feuchten Gases gegenüber dem kühleren Sauerstoff kommt es nicht zu einer nennenswerten Temperaturabsenkung im dampfführenden äußersten Rohr und damit nicht zur Kondensation von Wasserdampf im äußersten Rohr.

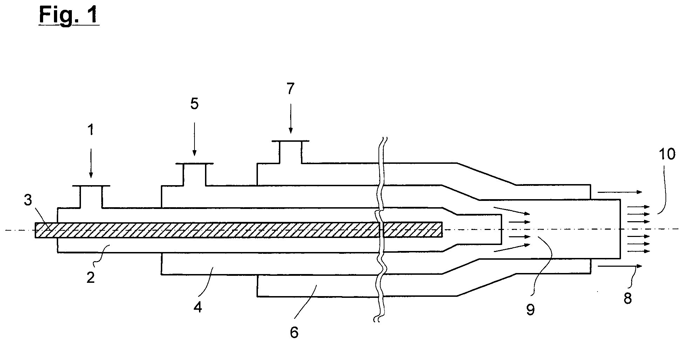

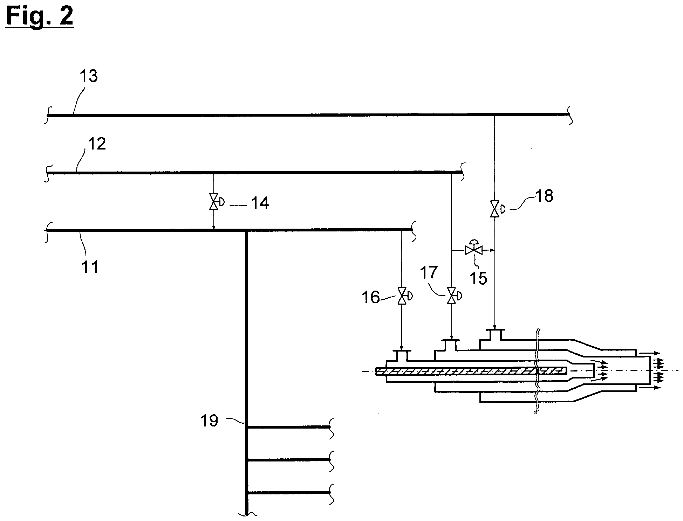

Die Erfindung wird im Folgenden anhand von 2 Skizzen näher erläutert. Fig. 1 zeigt dabei schematisch einen Schnitt durch eine Sauerstofflanze, deren Mündung in das Wirbelbett eines nicht gezeigten HTW Vergasungsreaktors mündet, Fig. 2 zeigt die Verschaltung der Versorgungsleitungen für Sauerstoff, Kohlendioxid und Dampf.

Sauerstoff 1 wird in das innerste Rohr 2 geleitet, in dem die Temperaturmesseinrichtung 3 angeordnet ist. Die Temperatur beträgt 180 Grad Celsius, der Druck am Eintritt ca. 28 bar. Der exakte Druck wird durch die Mengenregelung bestimmt, die dem Reaktor genau die für die Vergasung momentan gerade benötigte Menge an Sauerstoff zuführt. In das mittlere Rohr 4 wird Kohlendioxid 5 mit 230 Grad Celsius zugegeben. In das äußerste Rohr 6 wird überhitzter Wasserdampf 7 mit einem Druck von ca. 29 bar und einer Temperatur von 410 Grad Celsius eingeleitet. Dieser Wasserdampf erhitzt das Kohlendioxid auf eine Temperatur von ca. 270 Grad Celsius, wobei sich der Sauerstoff ebenfalls leicht erwärmt. Da der Taupunkt des Wasserdampfes hierbei nicht unterschritten wird, kondensiert kein Wasserdampf aus und es bilden sich keine Tröpfchen an der Mündung 8 des äußersten Rohres, so dass sich ein homogener Dampfschleier um die Spitze der Sauerstofflanze ausbilden kann.

Der Sauerstoff des innersten Rohres und das Kohlendioxid des mittleren Rohres werden an der Mischungsstelle 9 zu einem gemeinsamen Gasstrom zusammengeführt, wobei die Zuführungsstelle bereits im Inneren der Wirbelschicht im HTW-Vergasungsreaktor liegt. Die Mischung wird als Freistrahl 10 in die Wirbelschicht geleitet, wobei der Dampfschleier eine Wirbelbildung des Sauerstoffs um die Düsenspitze herum verhindert und somit einer möglichen lokalen Überhitzung mit der Folge von Ascheerweichung und Anbackungen an der Düsenspitze verhindert. Auf diese Weise kann der Wirbelschichtreaktor bei einem Druck von 28 bar betrieben werden.

Fig. 2 zeigt ein Verschaltungsschema mit den Versorgungsleitungen für Sauerstoff 11, Kohlendioxid 12 und überhitzten Dampf 13 sowie den wichtigsten Absperr- und Regelventilen. Kohlendioxid kann im Notfall über das Spülventil 14 in die Sauerstoffleitung und über das Regelventil 15 in die Dampfleitung eingeleitet werden. Im Regelfall sind die beiden Ventile geschlossen. In Abhängigkeit der benötigten Sauerstoffmenge dient das Regelventil 16 der Sauerstoffversorgung, das Regelventil 17 der Kohlendioxidmengenregelung und das Regelventil 18 der Dampfeinleitung. Sauerstoff 11 kann über den Sauerstoffverteiler 19 auch zu anderen Düsenebenen verteilt werden.

Die folgenden Rechen- und Auslegungsbeispiele verdeutlichen die Erfindung:
- In Beispiel 1 wird das äußerste Rohr mit Wasserdampf und das mittlere Rohr mit Stickstoff beaufschlagt.
- In Beispiel 2 wird das äußerste Rohr mit Wasserdampf, das mittlere Rohr mit Kohlendioxid beaufschlagt.
- In Beispiel 3 wird das äußerste Rohr mit einem Gemisch, welches zu gleichen Massenanteilen aus Kohlendioxid und Wasserdampf besteht, das mittlere Rohr mit Kohlendioxid beaufschlagt.
- In Beispiel 4 wird das äußerste Rohr mit Wasserdampf beaufschlagt und das mittlere Rohr undurchströmt gelassen.

In allen Beispielen wird dass innerste Rohr mit Sauerstoff beaufschlagt, wobei der Innendurchmesser ca. 25 mm beträgt und ein 11 mm starkes Thermoelement innen angeordnet ist. Alle Maßangaben sind ungefähre Angaben aus Auslegungsrechnungen.

| | Beispiel 1 | Beispiel 2 | Beispiel 3 | Beispiel 4 |
|---|---|---|---|---|
| Spalt des äußerstes Rohrs [mm] | 9 | 15 | 15 | 15 |
| Spalt des mittleres Rohrs [mm] | 10 | 4 | 4 | 4 |
| Massendurchfluss durch äußerstes Rohr [kg/s] | 0,039 | 0,039 | 0,039 | 0,039 |
| Massendurchfluss durch mittleres Rohr [kg/s] | 0,0039 | 0,0039 | 0,0039 | - |
| Massendurchfluss durch innerstes Rohr [kg/s] | 0,225 | 0,225 | 0,225 | 0,225 |
| Eintrittstemperatur in äußerstes Rohr [°C] | 410 | 410 | 410 | 410 |
| Eintrittstemperatur in mittleres Rohr [°C] | 230 | 230 | 230 | - |
| Eintrittstemperatur in innerstes Rohr [°C] | 180 | 180 | 180 | 180 |
| Austrittstemperatur aus äußerstem Rohr [°C] | 400 | 390 | 390 | 390 |
| Austrittstemperatur aus mittlerem Rohr [°C] | 270 | 270 | 270 | - |
| Austrittstemperatur aus innerstem Rohr [°C] | 182 | 182 | 182 | 182 |

In allen Fällen wird die Sattdampftemperatur des feuchten Gases des äußerten Rohres im mittleren Rohr an keiner Stelle unterschritten, so dass keine Kondensation auftreten kann.

Die Erfindung ist nicht auf die dargestellten Beispiele beschränkt, ferner ist es auch möglich, bei verschiedenen Lastfällen oder Betriebsfällen die jeweiligen Durchströmungen den Anforderungen flexibel anzupassen.

### Bezugzeichenliste:

- 1: Sauerstoff
- 2: innerstes Rohr
- 3: Temperaturmesseinrichtung
- 4: mittleres Rohr
- 5: Kohlendioxid
- 6: äußerstes Rohr
- 7: Wasserdampf
- 8: Mündung des äußersten Rohres
- 9: Mischungsstelle
- 10: Freistrahl
- 11: Sauerstoff
- 12: Kohlendioxid
- 13: Dampf
- 14: Spülventil
- 15: Regelventil
- 16: Regelventil
- 17: Regelventil
- 18: Regelventil
- 19: Sauerstoffverteiler

## Patentansprüche

1. Sauerstofflanze, aufweisend wenigstens drei koaxial zueinander angeordnete und wenigstens jeweils einen Ringspalt begrenzende Rohre, wobei
• das äußerste Rohr für die Durchleitung von überhitztem Dampf ausgeführtl ist und eine Dampfzuführungsstelle aufweist,
• das mittlere Rohr als Ringspalt ausgeführt ist,
• das innerste Rohr für die Durchleitung von mit einer Temperatur von höchstens 180°C heißem Sauerstoff ausgeführt ist und eine Sauerstoffzuführungsstelle aufweist,
• innerhalb des innersten Rohres eine Temperatursonde angeordnet ist, die bis kurz vor die Mündung des innersten Rohres reicht,
• sich das innerste Rohr vor seiner Mündung düsenartig verjüngt,
• das innerste Rohr in das mittlere Rohr mündet, und
• die Mündung des mittleren Rohres gegenüber der Mündung des äußersten Rohres weiter herausragt.

2. Sauerstofflanze nach Anspruch 1, **dadurch gekennzeichnet, dass** das mittlere Rohr auf der Mündungsseite der Sauerstofflanze offen ausgeführt wird.

3. Sauerstofflanzen nach Anspruch 1, **dadurch gekennzeichnet, dass** das mittlere Rohr für die Durchleitung von trockenem Gas ausgeführt wird und eine Gaseinleitungsstelle aufweist.

4. Sauerstofflanze nach Anspruch 3, **dadurch gekennzeichnet, dass** sich das mittlere Rohr vor der Mündung des innersten Rohres in das mittlere Rohr düsenartig verjüngt.

5. Verfahren zur Einleitung von Sauerstoff in einen nach dem HTW-Verfahren betriebenen Wirbelschichtvergasungsreaktor mittels einer Sauerstofflanze entsprechend einem der Ansprüche 1 bis 4, wobei
• in das äußerste Rohr feuchtes Gas mit einem Druck oberhalb des Druckes im Wirbelschichtvergasungsreaktor zugeführt wird,
• in das innerste Rohr Sauerstoff mit einer Temperatur von höchstens 180°C und mit einem Druck oberhalb des Druckes im Wirbelschichtvergasungsreaktor durchgeleitet wird,
• feuchtes Gas aus der Mündung des äußersten Rohres als Mantelströmung um die Mündung des mittleren Rohres und den austretenden Freistrahl austritt, wobei die Strömungsgeschwindigkeit des austretenden feuchten Gases größer als die des austretenden Gases aus dem innersten Rohr eingestellt wird.

6. Verfahren nach Anspruch 5, **dadurch gekennzeichnet, dass**
• das mittlere Rohr mit trockenem Gas beaufschlagt wird,
• Sauerstoff und trockenes Gas vor der Mündung des mittleren Rohres vermischt werden,
• feuchtes Gas aus der Mündung des äußersten Rohres als Mantelströmung um die Mündung des mittleren Rohres und den austretenden Freistrahl austritt, wobei die Strömungsgeschwindigkeit des austretenden feuchten Gases größer als die des austretenden Gemisches aus trockenem Gas und Sauerstoff eingestellt wird.

7. Verfahren nach einem der Ansprüche 5 oder 6, **dadurch gekennzeichnet, dass** das feuchte Gas überhitzter Wasserdampf ist.

8. Verfahren nach einem der Ansprüche 5 oder 6, **dadurch gekennzeichnet, dass** das feuchte Gas eine Mischung aus Kohlendioxid und überhitztem Wasserdampf ist.

9. Verfahren nach Anspruch 6, **dadurch gekennzeichnet, dass** das trockene Gas Kohlendioxid ist.

10. Verfahren nach Anspruch 6, **dadurch gekennzeichnet, dass** das trockene Gas Stickstoff ist.

11. Verfahren nach Anspruch 6, **dadurch gekennzeichnet, dass** das trockene Gas eine Mischung aus Kohlendioxid und Luft ist.

12. Verfahren nach Anspruch 6, **dadurch gekennzeichnet, dass** das trockene Gas eine Mischung aus Kohlendioxid und Stickstoff ist

13. Verfahren nach Anspruch 5, **dadurch gekennzeichnet, dass** das trockene Gas im Betrieb nicht bewegt wird.

## Claims

1. Oxygen lance, having at least three pipes arranged coaxially to one another and at least in each case delimiting an annular gap,
• the outermost pipe being designed for the conduction of superheated steam and having a steam feed point,
• the middle pipe being designed as an annular gap,
• the innermost pipe being designed for the conduction of oxygen with a temperature of at most 180°C and having an oxygen feed point,
• there being arranged inside the innermost pipe a temperature probe which reaches to just short of the mouth of the innermost pipe,
• the innermost pipe tapering in a nozzle-like manner upstream of its mouth,
• the innermost pipe issuing into the middle pipe, and
• the mouth of the middle pipe projecting further in relation to the mouth of the outermost pipe.

2. Oxygen lance according to Claim 1, **characterized in that** the middle pipe is designed to be open on the mouth side of the oxygen lance.

3. Oxygen lance according to Claim 1, **characterized in that** the middle pipe is designed for the conduction of dry gas and has a gas introduction point.

4. Oxygen lance according to Claim 3, **characterized in that** the middle pipe tapers in a nozzle-like manner upstream of the mouth of the innermost pipe issuing into the middle pipe.

5. Method for introducing oxygen into a fluidized bed gasification reactor, operated according to the HTW method, by means of an oxygen lance according to one of Claims 1 to 4,
• moist gas being fed into the outermost pipe at a pressure above the pressure in the fluidized bed gasification reactor,
• oxygen being conducted into the innermost pipe at a temperature of at most 180°C and with a pressure above the pressure in the fluidized bed gasification reactor,
• moist gas emerging from the mouth of the outermost pipe as a cladding flow around the mouth of the middle pipe and the emerging free jet, the flow velocity of the emerging moist gas being set higher than that of the emerging gas from the innermost pipe.

6. Method according to Claim 5, **characterized in that**
• the middle pipe is subjected to dry gas,
• oxygen and dry gas are intermixed upstream of the mouth of the middle pipe,
• moist gas emerges from the mouth of the outermost pipe as a cladding flow around the mouth of the middle pipe and the emerging free jet, the flow velocity of the emerging moist gas being set higher than that of the emerging mixture of dry gas and of oxygen.

7. The method according to either one of Claims 5 or 6, **characterized in that** the moist gas is superheated steam.

8. Method according to either one of Claims 5 or 6, **characterized in that** the moist gas is a mixture of carbon dioxide and of superheated steam.

9. The method according to Claim 6, **characterized in that** the dry gas is carbon dioxide.

10. Method according to Claim 6, **characterized in that** the dry gas is nitrogen.

11. Method according to Claim 6, **characterized in that** the dry gas is a mixture of carbon dioxide and of air.

12. Method according to Claim 6, **characterized in that** the dry gas is a mixture of carbon dioxide and of nitrogen.

13. Method according to Claim 5, **characterized in that** the dry gas is not moved during operation.

## Revendications

1. Lance à oxygène, comprenant au moins trois tubes disposés de façon coaxiale l'un par rapport à l'autre et limitant au moins chaque fois une fente annulaire, dans laquelle
• le tube le plus extérieur est destiné à la circulation de vapeur surchauffée et présente un point d'introduction de vapeur,
• le tube médian est réalisé sous forme de fente annulaire,
• le tube le plus intérieur est destiné à la circulation d'oxygène chaud à une température de 180°C au maximum et présente un point d'introduction d'oxygène,
• une sonde de température, qui s'étend jusqu'à faible distance de l'embouchure du tube le plus intérieur, est disposée à l'intérieur du tube le plus intérieur,
• le tube le plus intérieur se rétrécit en forme de tuyère avant son embouchure,
• le tube le plus intérieur débouche dans le tube médian, et
• l'embouchure du tube médian s'étend plus loin que l'embouchure du tube le plus extérieur.

2. Lance à oxygène selon la revendication 1, **caractérisée en ce que** le tube médian est ouvert sur le côté de l'embouchure de la lance à oxygène.

3. Lance à oxygène selon la revendication 1, **caractérisée en ce que** le tube médian est réalisé en vue de la circulation de gaz sec et présente un point d'introduction de gaz.

4. Lance à oxygène selon la revendication 3, **caractérisée en ce que** le tube médian se rétrécit en forme de tuyère avant l'embouchure du tube le plus intérieur dans le tube médian.

5. Procédé pour injecter de l'oxygène dans un réacteur de gazéification à lit fluidisé fonctionnant selon le procédé HTW au moyen d'une lance à oxygène selon l'une quelconque des revendications 1 à 4, dans lequel
• on introduit dans le tube le plus extérieur un gaz humide avec une pression supérieure à la pression dans le réacteur de gazéification à lit fluidisé,
• on fait circuler dans le tube le plus intérieur de l'oxygène à une température de 180°C au maximum et avec une pression supérieure à la pression dans le réacteur de gazéification à lit fluidisé,
• du gaz humide sort de l'embouchure du tube le plus extérieur sous la forme d'un écoulement en forme de gaine entourant l'embouchure du tube médian et le jet libre sortant, dans lequel on règle la vitesse d'écoulement du gaz humide sortant plus élevée que celle du gaz sortant hors du tube le plus intérieur.

6. Procédé selon la revendication 5, **caractérisé en ce que**
• on alimente le tube médian en gaz sec,
• on mélange de l'oxygène et du gaz sec avant l'embouchure du tube médian,
• du gaz humide sort de l'embouchure du tube le plus extérieur sous la forme d'un écoulement en forme de gaine entourant l'embouchure du tube médian et le jet libre sortant, dans lequel on règle la vitesse d'écoulement du gaz humide sortant plus élevée que celle du mélange de gaz sec et d'oxygène sortant.

7. Procédé selon une des revendications 5 ou 6, **caractérisé en ce que** le gaz humide est de la vapeur surchauffée.

8. Procédé selon une des revendications 5 ou 6, **caractérisé en ce que** le gaz humide est un mélange de dioxyde de carbone et de vapeur surchauffée.

9. Procédé selon la revendication 6, **caractérisé en ce que** le gaz sec est du dioxyde de carbone.

10. Procédé selon la revendication 6, **caractérisé en ce que** le gaz sec est de l'azote.

11. Procédé selon la revendication 6, **caractérisé en ce que** le gaz sec est un mélange de dioxyde de carbone et d'air.

12. Procédé selon la revendication 6, **caractérisé en ce que** le gaz sec est un mélange de dioxyde de carbone et d'azote.

13. Procédé selon la revendication 5, **caractérisé en ce que** le gaz sec n'est pas déplacé en cours de fonctionnement.
